# EUROPÄISCHE PATENTSCHRIFT

(11) **EP 0 829 696 B1**
(45) Veröffentlichungstag und Bekanntmachung des Hinweises auf die Patenterteilung: **04.08.2004**
(21) Anmeldenummer: 97114838.2
(22) Anmeldetag: 27.08.1997
(51) Int. Cl.: G02B 23/16

(54) **Zielfernrohr**
Telescopic sight
Lunette de visée

(30) Priorität: 12.09.1996 DE 29615815 U
(43) Veröffentlichungstag der Anmeldung: 18.03.1998
(73) Patentinhaber: Hensoldt AG, 35573 Wetzlar (DE)
(72) Erfinder: Dross, Heinrich, 35630 Ehringshausen-Daubhausen (DE)
(74) Vertreter: Müller-Rissmann, Werner Albrecht, Dr.

(56) Entgegenhaltungen:
- DE-A- 4 438 955
- US-A- 5 223 650

## Beschreibung

Die Erfindung betrifft ein Zielfernrohr zur Anbringung an eine Handfeuerwaffe.

Zielfernrohre weisen in der Regel einen kreisförmigen Korpus auf, an welchen zu beiden Seiten ein Zylinderkegel angesetzt ist, um den Durchmesser des Rohres im Okular und Objektivbereich zu vergrößern.

Aus dem amerikanischen Geschmacksmuster DES. 275,495 ist ein Zielfernrohr bekannt, bei welchem auf einem aus dem Stand der Technik bekannten Korpus für ein Zielfernrohr streifenförmige Aufsätze angebracht sind. Das Zielfernrohr hat einen kreisrunden Korpus, auf welchem die Aufsätze lediglich zusätzlich aufgebracht wurden.

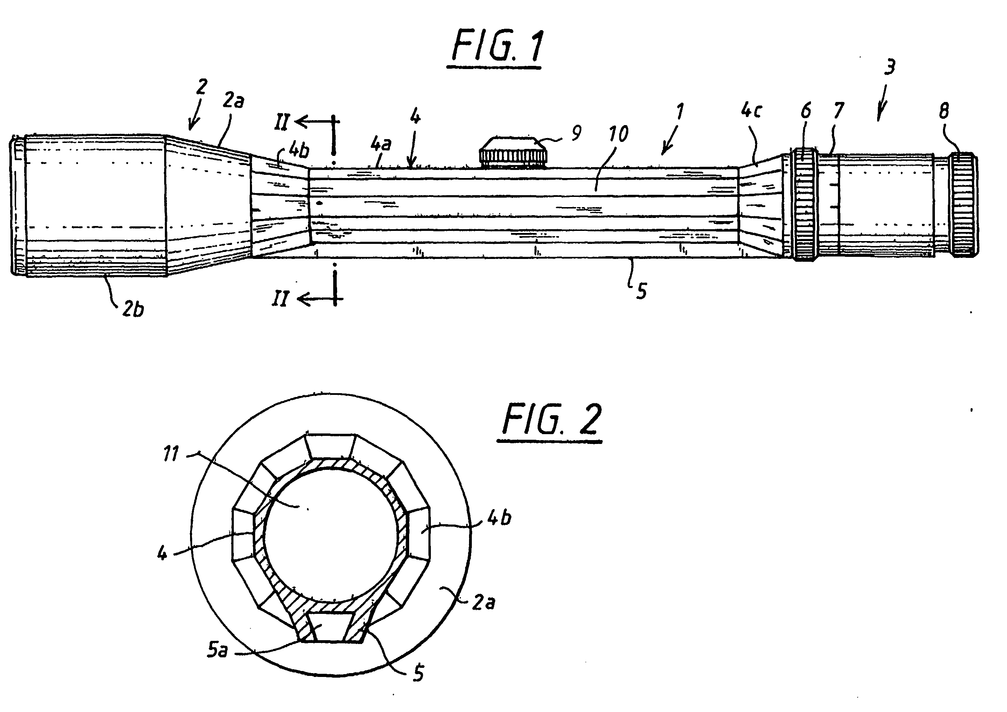

Aus der DE 44 38 955 ist ein Zielfernrohr bekannt, bei welchem das Mittelteil eine im wesentlichen quadratischen Querschnitt besitzt. Das in der Figur 1 dargestellte Okular (6) ist so gezeichnet, als ob es aus mehreren Planflächen zusammengesetzt ist. Diese Darstellung des Okular rührt her von dem verwendeten CAD-Programm bei der Erstellung der Zeichnung. Im Text ist diese von dem bekannten Stand der Technik abweichende Okulargestaltung nicht erwähnt.

Aus der US-A-5,223,650 ist ein Zielfernrohr bekannt, mit einem Pendel, dass durch Fehlhaltung erzeugte Abweichungen von der Senkrechten anzeigen soll. Das Okular dieses Zielfernrohres weist eine Hülle auf. Diese Hülle zeigt Vertiefungen (14) zur besseren Griffigkeit auf. Maßnahmen zur Steigerung der Festigkeitseigenschaften sind in dieser Anmeldung weder beabsichtigt, noch offenbart.

Es ist die Aufgabe der Erfindung eine Zielfernrohrhülle zu schaffen, welche bei möglichst geringem Gewicht hohe Festigkeitseigenschaften aufweist.

Diese Aufgabe wird erfindungsgemäß durch den kennzeichnenden Teil des ersten oder des zweiten Anspruchs gelöst.

Das erfindungsgemäße Zielfernrohr zeichnet sich dadurch aus, dass die äußere Oberfläche der Hülle ganz oder teilweise aus Planflächen zusammengesetzt ist. Dies ist insbesondere bei gezogenen Rohren vorteilhaft, welche spanabhebend bearbeitet werden. Indem man gezogene Hüllen und nicht mehr gegossene Hüllen verwendet, erreicht man bessere Festigkeitseigenschaften.

Der herkömmliche Querschnittskreis mit nach außen abstehender Leiste für die Montierung ist sehr aufwendig in der Herstellung und wird durch Längsfräsen in vielen Einzelschritten (vielzähliger Polygonzug) und anschließendem Schleifen hergestellt.

Der Übergang zu einer Polygonform mit N-Ecken vereinfacht die Fertigung, da nur noch N-Planflächen gefräst werden müssen (N∈ 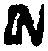 ).

Die Erfindung eignet sich insbesondere für Zielfernrohre mit variabler Vergrößerung und einer zu dessen Veränderung dienenden Verstelleinrichtung sowie einem als äußeren Hülle dienenden Außenrohr, welches ein Umkehrsystem aufweist.

Die Erfindung im folgenden in beispielhafterweise anhand von Zeichnungen erläutert, wobei weitere wesentliche Merkmale sowie dem besseren Verständnis dienende Erläuterung und Ausgestaltungsmöglichkeiten des Erfindungsgedankens beschrieben sind.

Dabei zeigen:
- Figur 1: eine seitliche Ansicht des erfindungsgemäßen Zielfernrohrs; und
- Figur 2: einen Schnitt durch das in Figur 1 dargestellte Zielfernrohr.

Das in den Figuren 1 und 2 dargestellte Zielfernrohr (1) besitzt eine Hülle (2, 4, 3), auch Tubus genannt, welche aus drei Teilen aufgebaut ist. Das Vorderteil (2) auch Objektivteil genannt besitzt eine kreiszylindrische Form (2b), mit einem Ansatzstück (2a), welches durch seine kreispyramidenförmige Form zu einer Querschnittsverjüngung des Objektivteils (2) führt.

Das zweite Teil der Hülle wird durch das Okularteil (3) dargestellt. Am Okularteil (3) befindet sich eine Skala (7) für ein Stellrad (6), mit welchem die variable Vergrößerung des Zielfernrohres (1) verändert werden kann. Am Ende des Objektivteils (3) befindet ein weiteres Stellrad (8), mit welchem die Optik das Zielfernrohr (1) scharf gestellt werden kann.

Zwischen dem Objektivteil (2) und dem Okularteil (3) befindet sich das Mittelteil (4). Das Objektivteil (2, 2a) und das Mittelteil (4) sind aus einem monolithischen Teil gefertigt. An seinem, dem Objektivteil entgegengesetzten Ende ist an diesem Mittelteil (4) das Okularteils (3) lösbar befestigt. Das Mittelteil (4) besitzt eine im wesentlichen kreiszylindrische Hülle. An seinen Enden besitzt das Mittelteil Ansätze (4b, 4c) aus Kreiszylinderstümpfen, welche den äußeren und inneren Durchmesser der Hülle (4) vergrößern. Im unteren Teil des Mittelteils befindet sich eine Montageschiene (5) zur Anbringung des Zielfernrohrs (1) auf einer Handfeuerwaffe (in den Figuren nicht dargestellt). Dazu weist die Montageschiene (5) eine nach unten offene trapezförmige Öffnung (5a) auf. Der Innendurchmesser (11) des Mittelteils (4) ist rotationssymmetrisch rund ausgedreht. Demhingegen weist die Oberfläche (4a) des Mittelteils (4) eine Vielzahl von Planflächen (10) auf. Die Planflächen (10) haben fast alle dieselbe Größe und erstrecken sich auch auf die kreiszylindrischen Fortsätze (4b, 4c) des Mittelteils (4) an seinen Enden bis zu den Enden der Montageschiene (5). Am Mittelteil (4) sind auch zwei Verstelleinrichtungen (9) angebracht, wobei sich die nicht sichtbare Verstelleinrichtung hinter dem Zielfernrohr (1) befindet und somit in den Figuren nicht sichtbar ist.

Es hat sich herausgestellt, daß die Anzahl dieser Planflächen (10) zwischen 5 und 40 liegen sollte. Dabei ist es am vorteilhaftesten, wenn die Anzahl der Planflächen (10) im Bereich zwischen 10 und 20 liegt. Diese Planflächen (10) ermöglichen eine sehr leichte und sehr preiswerte spanabhebende Herstellung des Zielfernrohr-Mittelteils (4). Die sich zwischen den Planflächen (10) ergebenden Ecken sollten zumindest geringfügig abgerundet sein, damit keine Verletzungsgefahr bei der Handhabung des Zielfernrohres (1) besteht.

Die erfindungsgemäßen Zielfernrohre können eine Hülle mit separierbarem Okular- und/oder Objektivteil besitzen. Sie können aber auch ganz aus einem Teil gefertigt sein.

Die gewünschten hohen Festigkeitseigenschaften der Zielfernrohrhülle bei Zielfernrohren zur Anbringung an eine Handfeuerwaffe mit variabler Vergrößerung und mindestens einer zu dessen Veränderung dienenden Verstelleinrichtung sowie einem als äußeren Hülle dienenden Außenrohr, welches ein Umkehrsystem aufweist bei möglichst niedrigem Gewicht lassen sich auch dadurch erreichen, daß die äußere Oberfläche der Hülle ganz oder teilweise aus flächenmäßig aneinanderreihbaren Flächenstücken zusammengesetzt ist, welche eine Wölbung bzw. eine Vertiefung aufweisen. Insbesondere bei der Verwendung von Sechseckflächen wurden dann sehr gute Ergebnisse erzielt, wenn diese Sechseckflächen eine Vertiefung aufweisen.

Versuche haben ergeben, daß sich das Hüllenmaterial dadurch um 30 % reduzieren läßt, ohne das sich die Festigkeitseigenschaften der Hülle dadurch verringern.

## Patentansprüche

1. Zielfernrohr zur Anbringung an eine Handfeuerwaffemit einer Hülle, wobei die innere Oberfläche der Hülle kreisförmig ausgestaltet ist und die Hülle ein Objektivteil, ein Okularteil und ein dazwischen angeordnetes Mittelteil umfasst, **dadurch gekennzeichnet, dass** zur Erreichung höherer Festigkeitseigenschaften die äußere Oberfläche (4a) der Hülle (4) des Mittelteils ganz oder teilweise aus Planflächen (10) zusammengesetzt ist.

2. Zielfernrohr zur Anbringung an eine Handfeuerwaffe mit einer Hülle, wobei die innere Oberfläche der Hülle kreisförmig ausgestaltet ist und die Hülle ein Objektivteil, ein Okularteil und ein dazwischen angeordnetes Mittelteil umfasst, **dadurch gekennzeichnet, dass** zur Erreichung höherer Festigkeitseigenschaften die äußere Oberfläche (4a) der Hülle (4) des Mittelteils ganz oder teilweise aus flächenmäßig aneinanderreihbaren Flächenstücken, welche eine Wölbung bzw. eine Vertiefung aufweisen, zusammengesetzt ist.

3. Zielfernrohr nach Anspruch 1, **dadurch gekennzeichnet, dass** die äußere Oberfläche (4a) der Hülle (4) als eine Polygonform mit N-Ecken ausgestaltet ist, wobei N im Bereich zwischen 5 und 40 liegt.

4. Zielfernrohr nach Anspruch 1 oder 3, **dadurch gekennzeichnet, dass** die äußere Hülle aus einem separierbaren Okular- und/oder Objektivteil und einem Mittelteil aufgebaut ist.

5. Zielfernrohr nach einem der Ansprüche 1-4, **dadurch gekennzeichnet, dass** die Oberfläche (4a) spanabhebend hergestellt ist.

6. Zielfernrohr nach Anspruch 5, **dadurch gekennzeichnet, dass** die äußere Oberfläche (4a) durch einen Fräsprozess hergestellt ist.

7. Zielfernrohr nach einem der Ansprüche 1-6, **dadurch gekennzeichnet, dass** die Hülle (4) an zumindest einem Ende so ausgestaltet sind, dass sich die äußere Umhüllende vergrößert.

8. Zielfernrohr nach einem der Ansprüche 1-7, **dadurch gekennzeichnet, dass** die Ecken zumindest gering abgerundet sind.

9. Zielfernrohr nach Anspruch 2, **dadurch gekennzeichnet, dass** die äußere Oberfläche (4a) der Hülle (4) ganz oder teilweise aus Sechseckflächen zusammengesetzt ist, wobei diese Sechseckflächen eine Vertiefung aufweisen.

## Claims

1. Telescopic sight for fitting to a handheld firearm having a casing, with the inner surface of the casing being circular and the casing comprising an objective part, an eyepiece part and a central part arranged in between them, **characterized in that**, in order to achieve better strength characteristics, the outer surface (4a) of the casing (4) of the central part is composed entirely or partially of planar surfaces (10).

2. Telescopic sight for fitting to a handheld firearm having a casing, with the inner surface of the casing being circular and the casing comprising an objective part, an eyepiece part and a central part arranged in between them, **characterized in that**, in order to achieve better strength characteristics, the outer surface (4a) of the casing (4) of the central part is composed entirely or partially of surface pieces which can be arranged in a row over an area and are curved or have a depression.

3. Telescopic sight according to Claim 1, **characterized in that** the outer surface (4a) of the casing (4) is polygonal with N corners, where N is in the range between 5 and 40.

4. Telescopic sight according to Claim 1 or 3, **characterized in that** the outer casing is formed from a separable eyepiece and/or objective part and a central part.

5. Telescopic sight according to one of Claims 1-4, **characterized in that** the surface (4a) is produced by machining.

6. Telescopic sight according to Claim 5, **characterized in that** the outer surface (4a) is produced by means of a milling process.

7. Telescopic sight according to one of Claims 1-6, **characterized in that** the casing (4) is designed at at least one end such that the outer surrounding end is enlarged.

8. Telescopic sight according to one of Claims 1-7, **characterized in that** the corners are at least slightly rounded.

9. Telescopic sight according to Claim 2, **characterized in that** the outer surface (4a) of the casing (4) is entirely or partially composed of hexagonal surfaces, with these hexagonal surfaces having a depression.

## Revendications

1. Lunette de visée à monter sur une arme à feu manuelle comprenant une gaine, la surface intérieure de la gaine étant de forme circulaire et la gaine comprenant une partie objectif, une partie oculaire et une partie centrale disposée entre celles-ci, **caractérisée en ce que** pour obtenir des caractéristiques de solidité accrues, la surface extérieure (4a) de la gaine (4) de la partie centrale se compose en totalité ou en partie de surfaces planes (10).

2. Lunette de visée à monter sur une arme à feu manuelle comprenant une gaine, la surface intérieure de la gaine étant de forme circulaire et la gaine comprenant une partie objectif, une partie oculaire et une partie centrale disposée entre celles-ci, **caractérisée en ce que** pour obtenir des caractéristiques de solidité accrues, la surface extérieure (4a) de la gaine (4) de la partie centrale se compose en totalité ou en partie de pièces plates pouvant être alignées les unes contre les autres pour former une surface et qui présentent un bombement ou un enfoncement.

3. Lunette de visée selon la revendication 1, **caractérisée en ce que** la surface extérieure (4a) de la gaine (4) est réalisée sous la forme d'un polygone à N coins, N étant compris entre 5 et 40.

4. Lunette de visée selon la revendication 1 ou 3, **caractérisée en ce que** la gaine extérieure est constituée d'une partie oculaire et/ou objectif séparable et d'une partie centrale.

5. Lunette de visée selon l'une des revendications 1 à 4, **caractérisée en ce que** la surface (4a) est fabriquée par usinage.

6. Lunette de visée selon la revendication 5, **caractérisée en ce que** la surface extérieure (4a) est fabriquée par un processus de fraisage.

7. Lunette de visée selon l'une des revendications 1 à 6, **caractérisée en ce que** la gaine (4) est configurée au moins à son extrémité de manière à ce que l'extrémité extérieure de la gaine s'agrandit.

8. Lunette de visée selon l'une des revendications 1 à 7, **caractérisée en ce que** les coins sont au moins légèrement arrondis.

9. Lunette de visée selon la revendication 2, **caractérisée en ce que** la surface extérieure (4a) de la gaine (4) se compose en totalité ou en partie de surfaces hexagonales, ces surfaces hexagonales présentant un enfoncement.
